**Europäisches Patentamt**

**(19) European Patent Office**

**Office européen des brevets**

(11) Publication number : **0 317 478 B1**

(12) **EUROPEAN PATENT SPECIFICATION**

(45) Date of publication of patent specification :
17.05.95 Bulletin 95/20

(51) Int. Cl.⁶ : **G06F 9/44**

(21) Application number : **88480058.2**

(22) Date of filing : **11.10.88**

(54) **Dynamically adaptive environment for computer programs.**

(30) Priority : **17.11.87 US 121965**

(43) Date of publication of application :
**24.05.89 Bulletin 89/21**

(45) Publication of the grant of the patent :
**17.05.95 Bulletin 95/20**

(84) Designated Contracting States :
**BE CH DE ES FR GB IT LI NL SE**

(56) References cited :
**EP-A- 0 107 449**
**US-A- 4 691 278**
**DIGEST OF PAPERS SPRING COMPCON'83,**
**INTELLECTUAL LEVARAGE, San Fransisco,**
**CA, 28th February - 3rd March 1983, pages**
**415-420; G.E. KAISER et al.: "An environment**
**for system version control"**

(73) Proprietor : **International Business Machines Corporation**
**Old Orchard Road**
**Armonk, N.Y. 10504 (US)**

(72) Inventor : **Evans, Wayne O'Neil**
**3104 14th Avenue Northwest**
**Rochester Minnesota 55901 (US)**

(74) Representative : **Vekemans, André**
**Compagnie IBM France**
**Département de Propriété Intellectuelle**
**F-06610 La Gaude (FR)**

EP 0 317 478 B1

## Description

Background of the Invention.

The present invention relates to operating system commands, and in particular to the provision of multiple versions of commands which use the same command processing program.

When a decision is made by a computer manufacturer to switch to a new operating system to take advantage of better hardware, better useability, new standards, etc., it is crucial that a large customer base using the old operating system be able to run their applications on the new operating system. This is to protect the customer investment in their applications, which can run into millions of dollars for a large customer.

One of the past methods has been to use conversion programs, which take the source code of the customer application, and convert it to use the new operating system commands. A limitation of this method is that the source language statements have been lost, or do not exist for some applications. In addition, the conversion of source is often a lengthy process that slows the implementation of existing applications on a new system.

A further solution has been the implementation of multiple environments by the computer maker. Existing interfaces (system commands available to a user) are maintained by keeping both the previous and new versions of system programs that perform a similar function. This method requires a user to select the environment that an application will use, as well as requiring the maintenance and storage of two sets of operating system programs. The user also can not integrate new function provided by the new operating system into existing applications without conversion of the complete application to use the new operating system environment.

One example of the last solution is found in US Patent No 4,691,278 , in which multiple system architectural modes are provided. A register contains a mode selector value. One instruction of a program will invoke a series of micro-instructions which may be different for different modes. The starting address of micro-instructions may vary for the same instruction depending on the mode selected for the program. Different sets of micro-instructions must be maintained in this method. It is generally much more difficult to program in such a low level language as compared to a higher level language.

The document Digest of Papers Spring COMPCON 83, Intellectual Leverage, San Francisco, CA, 28th February -3rd March 1983, pages 415 - 420 ; G.E. Kaiser et al. : "An Environment for System Version Control" discloses a dynamically adaptive computer system for executing a plurality of programs which are compatible with different versions of system commands, comprising means for storing at least two versions of system command definitions, means within programs for indicating the version of system commands required by said programs and means for retrieving command definitions from said means for storing, the version of command definition which is retrieved being dependent on said means for indicating the version of system commands. It does not disclose the processing of the transformed commands.

The principal object of the invention is to provide a dynamically adaptive computer system according to claim 1.

Summary of the Invention

A computer system is designed to dynamically adapt to the use of multiple versions of operating system commands. The version desired by a user is identified either in an interactive session, or by an attribute in a program that the user desires to run.

Multiple versions of a given system command can be run by a single operating system program. This is accomplished by having a command definition for each version of a command, which definition has universal parameters for all versions of command. Each version of the command can then be transformed by the command definition for that version into a format acceptable to the single, operating system program for each command and its counterparts in other versions.

Multiple sets of command definitions are placed in separate storage directories called libraries. The libraries are then searched for each command definition as the corresponding command is to be processed. The order of search of the libraries is controlled based on the version of system commands desired.

A command definition consists of the name of the command processing program, and the parameter definitions that go with that program. The different versions of commands vary in the number of parameters, and hence, in the extent of function provided. Each version of a command is transformed using its command definition so that the same number of parameters are passed to the command processing program. This is done by using constants for parameter values which are missing in different versions. Thus, only one operating system program per command runs the different versions of the same system command.

A user application generally consists of multiple programs. Since each program contains an attribute which defines the version of system commands desired, the application program can contain a mix of programs that

EP 0 317 478 B1

use different versions of the system commands. If a user is gradually migrating to an enhanced version of operating system, new programs for the existing application can be written using the new version of system commands. The existing programs in the application can be either rewritten one at a time to take advantage of the advanced functions, or left as is, using the older version of system commands.

A newer version of system commands which has enhanced function usually has a number of additional new commands. The new commands can be used in a program which specifies the older version of system commands. This is because the library containing the older version of system command definitions will be searched first, and if the command is not found, the newer version of command definitions will be searched for the command. The first command definition matching the desired command is then processed. Therefore, a user need not convert an entire program if the new function desired is contained in a new command.

Description of the Drawings

Fig. 1A is pictorial representation of how the invention adapts commands from various versions of an operating system to run in a single operating system.

Fig. 1B is the format of a command definition stored in the libraries of Fig. 1A.

Fig. 1C is the format of a command character string.

Fig. 2A is a data flow diagram of the preferred embodiment of the invention.

Fig. 2B is a flow chart of the QCL/QCMD programs shown in Fig. 2A.

Fig. 3A and 3B is a flow chart of the operation of a command analyzer program in Fig. 2A.

Fig. 4 is a generalized flow chart for the command processing programs in Fig. 2A.

Fig. 5 is a flow chart of the operation of the compiler program in Fig. 2A.

Fig. 6 is a block diagram showing the search order through the version libraries of system commands depending on the version attribute of the program being processed.

Figs. 7, 8, and 9 are examples of counterpart commands, their different versions of command definitions, and their different syntax.

Fig. 10 is a block diagram example of nested programs in an application which use multiple different versions of system commands.

Detailed Description

As originally written, each application program would expect to use a particular version of system commands written for the program's original operating system. If one were to compare system commands from various operating systems, many system commands for one operating system will be similar to their counterpart commands in the other operating system. These counterpart system commands may use the same or different command name and may use different parameters or a different number of parameters per command.

An example of a complete command set for an operating system can be seen in a manual for an IBM System/38 entitled IBM System/38 Control Language Reference Manual (SC21-7731) 1986. This command set is referred to hereinafter as the version 1 (V1) command set. A second command set including almost all of the approximately 500 version 1 commands, plus about 200 new commands is the version 2 (V2) command set. The version 2 commands which are similar to the version 1 commands may have the same name, or a different name. They may have more parameters, the same number of parameters, or fewer parameters.

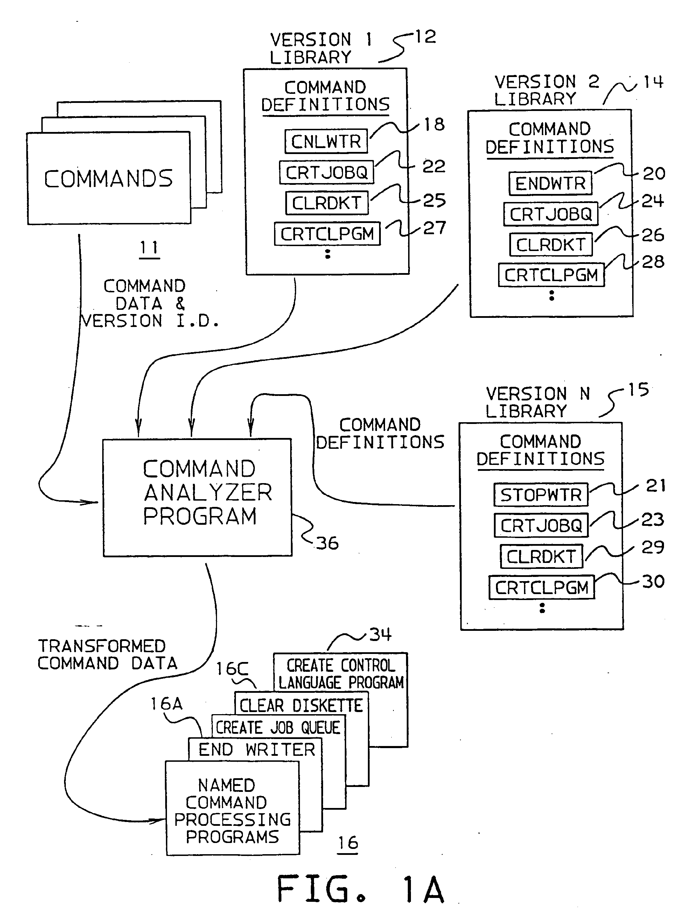

Fig. 1A pictorially represents the use of command processing programs 16 to perform the task or tasks called for by system commands 11 irrespective of which set or version the command comes from. There is one program 16 for each command 11. A command written for version 1, 2 or N can be processed by the same command processing program. (In a few cases, the function difference between counterpart commands is so different that each counterpart command has its own command processing program.) This is accomplished by transforming the command data to transformed data so that all counterpart commands in different versions have the same name and the same number of parameters.

Command analyzer program 36 performs the transformation based on a command definition for each counterpart version of a command. The counterpart command definitions have the same number of parameters and the same positional or sequential relationship between parameters from version to version. This universal format for counterpart command definitions is used to transform the actual command character string into a form compatible with the command's named command processing program 16.

In Fig. 1A separate versions of system command definitions are stored in libraries 12, 14 and 15. A first version in library 12 is a set of definitions for system commands from a version of an operating system for the IBM System/38. The second version in library 14 is a set of command definitions of system commands for an enhanced version of the System/38 operating system. An "Nth" version in library 15 is a set of command def-

3

EP 0 317 478 B1

initions for system commands of a customized system or a future operating system and indicates that any number of versions may be used.

In Fig. 1A names of counterpart command definitions are shown in each version library. The Cancel Writer command definition 18 in library 12 uses the name CNLWTR. The same function is achieved by its counterpart command ENDWTR whose command definition 20 is stored in version 2 library 14 and counter part command STOPWTR whose definition 21 is stored in version N library 15. The command name in this example changes from version to version, but due to the counterpart definitions all of these commands will call the same command processing program 16A named End Writer.

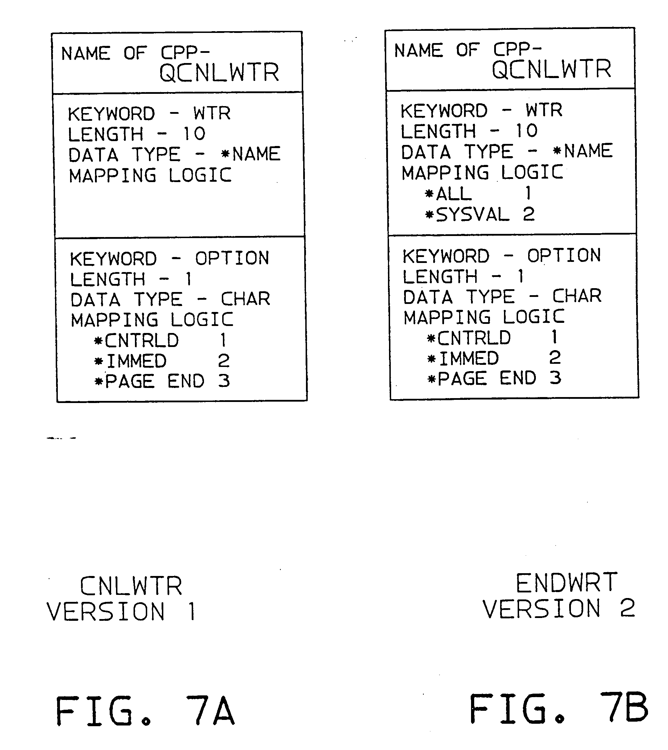

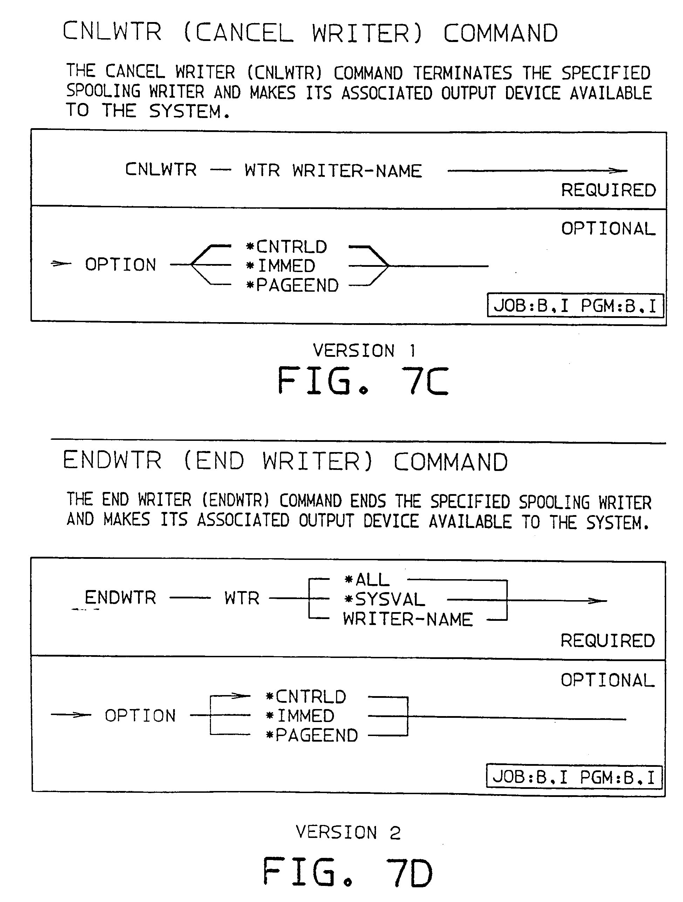

Create Job Queue uses the same name, CRTJOBQ, for each of its counterpart definitions 22, 23 and 24 in libraries 12, 15 and 14 respectively. For CRTJOBQ, the number of parameters in each definition is the same although the keywords are different. Clear Diskette command uses the same name, CLRDKT, for each of its counterpart definitions 25, 26 and 29 in the libraries, but each version of the command has a different number of parameters. These counterpart commands use different syntax and have different definitions in version 1 and version 2. They are shown in Figures 7 - 9 or are described in more detail hereinafter.

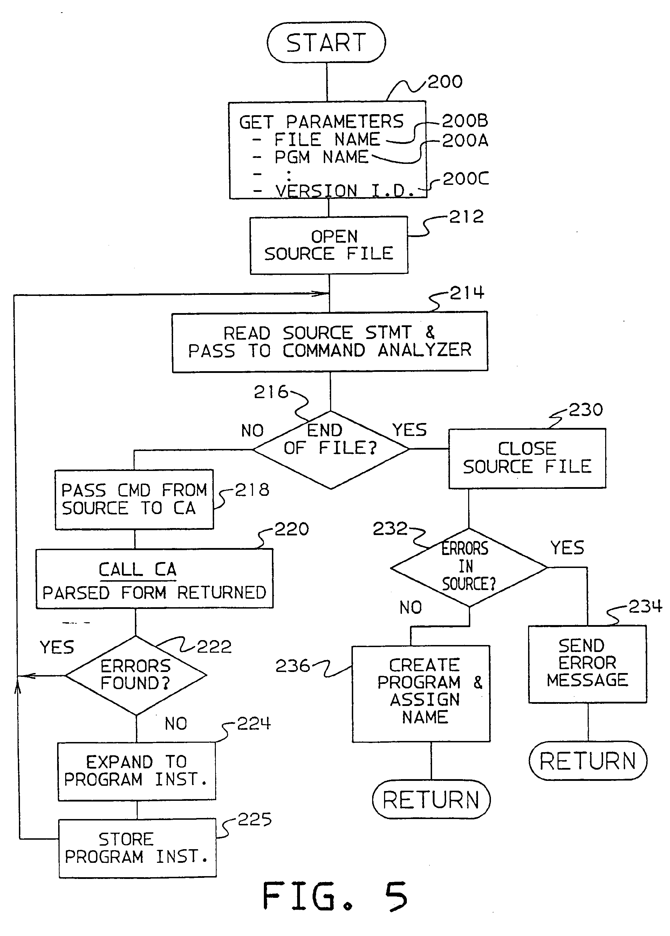

Create Control Language Program command uses the same name, CRTCLPGM, for each version and has different numbers of parameters in each of its counterpart definitions 27, 28 and 30 in the libraries. The command processing program for this command is compiler 34 whose function and operation will be described in detail in Fig. 5.

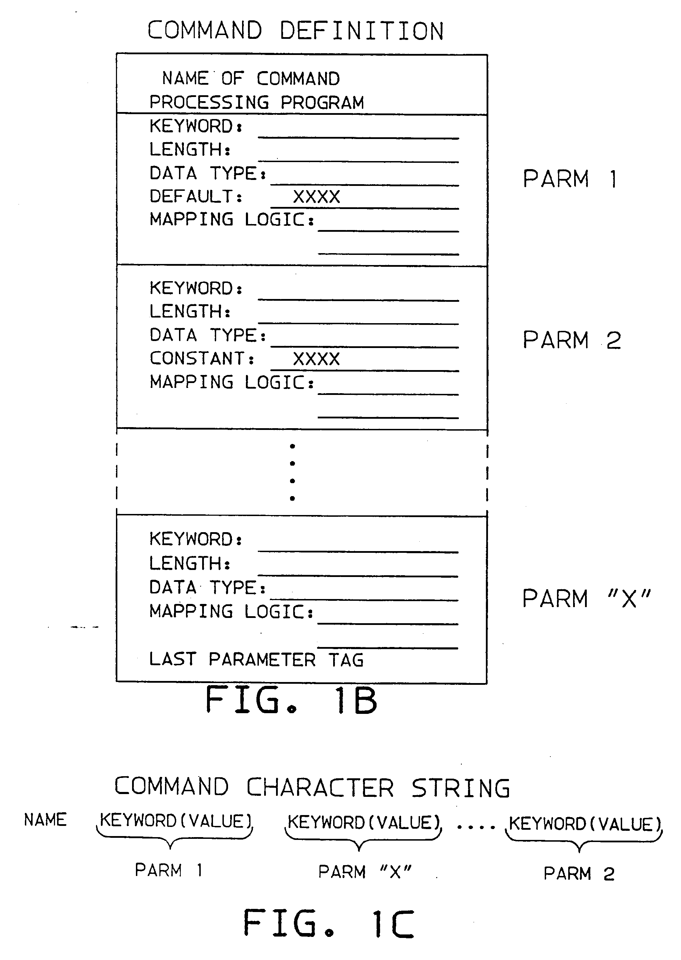

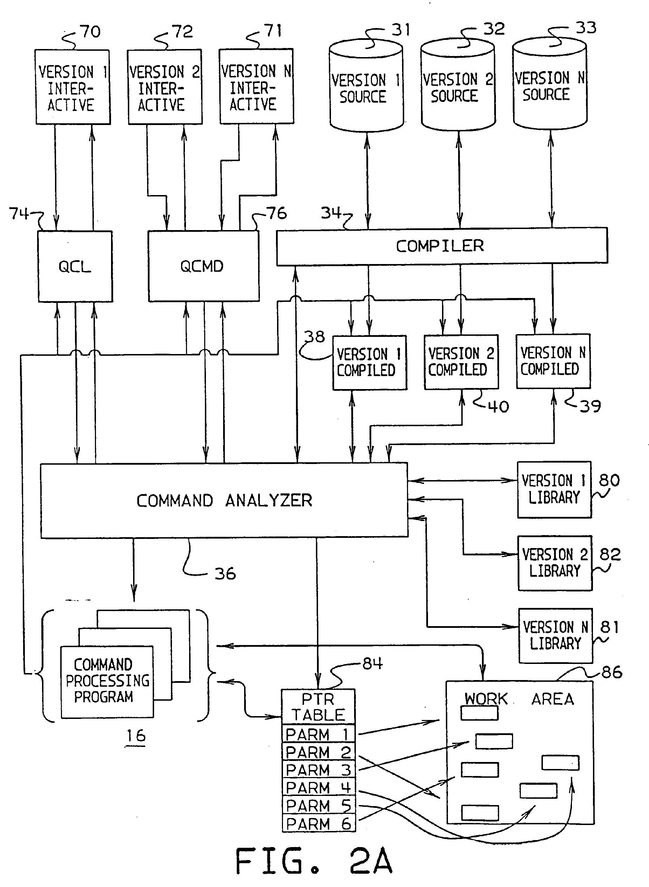

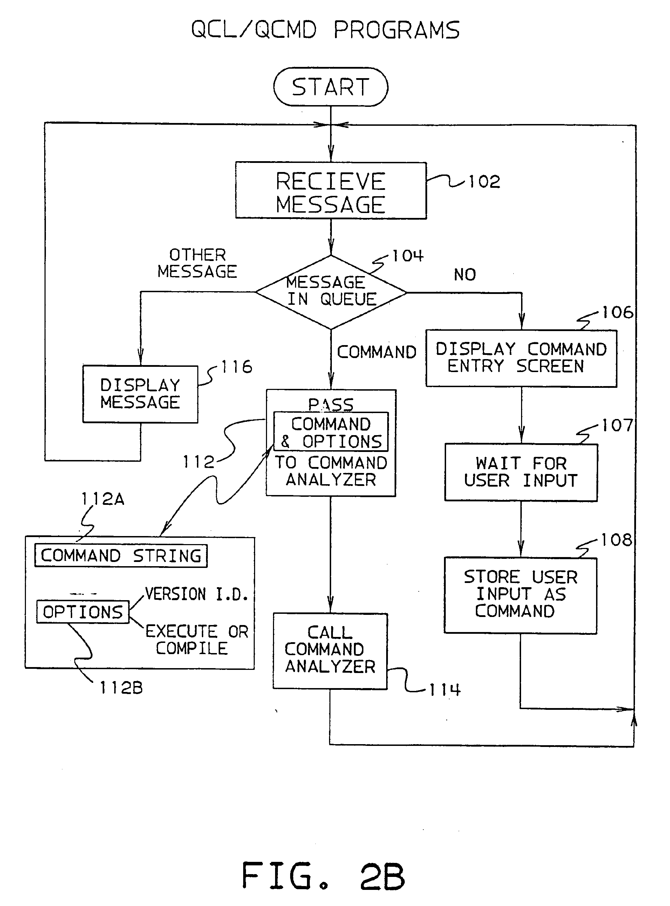

The actual format of command definitions and commands is shown in Fig. 1B and 1C respectively. In Fig. 1C, each command begins with the command name such as ENDWTR or CRTJOBQ. This is followed by a keyword and value for each parameter in the command. The sequence of the parameters is not important in the command, and the parameters in Fig. 1C are not arranged in the same order as those in the command definition in Fig. 1B. In Fig. 1C, the command definition format consists of the name of the command processing program to be called for execution and the parameter definitions for the command. The parameter definitions are used by the command analyzer 36 (Fig. 2) to interpret a received command character string containing the command and command parameters. The analyzer checks the syntax of the command string and builds a pointer table to point to the parameter information to be used by the called command processing program. This process will be described in more detail hereinafter with reference to Fig. 2A.

The parameter definition elements stored for each parameter in each command definition in a version library are keyword, length, data type, default or constant, and mapping logic. The keyword identifies the parameter. The length specifies the legitimate length of the parameter. A parameter that exceeds its length boundaries will cause the command to be rejected. The data type specifies rules for the data which vary depending on whether the data type is name, decimal, binary, etc. Default specifies actual parameter values that will be inserted if the keyword for that parameter is missing from the command. A constant specifies a value that is inserted for a parameter by the system; a constant can not be inserted by the user. Mapping logic refers to a logical conversion of the parameter from a name to a value representing the name.

Figures 2A, 2B, 3A, 3B and 4 show a preferred embodiment of the invention which will run various versions of a command entered interactively or as a part of a selected program. A command is entered interactively at a terminal by a user typing the character string for the command and its parameters. One user, represented as interactive session 70, can be using version 1 commands in an interactive session, while at the same time and on the same system, a second user, represented as interactive session 72, can be issuing version 2 commands. The first user is issuing version 1 commands in a session controlled by a command entry screen program 74 named QCL. This program can be called by the user or preset by the system programmer at system definition, or pre-specified by the user so that it is called each time the user signs on through a workstation.

The QCL (or QCMD) program's function is to interface between the workstation display and the command analyzer program 36. QCL/QCMD programs are illustrated in Fig. 2B. When the operating system gives QCL control, QCL issues a receive message signal at step 102 which causes a message queue to pass the top message in its queue to QCL. Decision 104 branches the program flow depending on whether there is no message in the queue, the message is a command or the message is other than a command (error or diagnostic message for example).

If there is no message, step 106 causes a command entry screen to be displayed at the workstation. QCL then waits 107 for the user to enter a command. After the user responds with a command, QCL stores (108) the command in the message queue. The QCL program returns to receive message 102 and checks for messages in the queue at decision step 104. Since there is now a command in the queue, QCL branches to step 112. Step 112 passes the command character string and option information to the command analyzer 36 (Fig. 2A). The option information includes the version ID and an indicator that the command is to be executed. After the command and options are passed, QCL calls (114) the command analyzer program and then returns to receive message.

4

Most important for this invention, if the message is a command, step 112 calls the command analyzer and step 114 passes to the command analyzer the command 112A and option 112B containing the version ID. If the program running is QCL, the version ID passed is Version 1. If the program running is QCMD, the version ID passed is Version 2. It will be apparent to one skilled in the art that rather than using different programs to pass version ID's, a single program might be used whose profile could be changed by the user or a system engineer to specify the desired version ID.

The last branch from decision 104 is "other message." If there is a message but it is not a command, steps 108 and 110 cause the workstation to display (116) the message. Again QCL program control returns to receive message step 102.

Regardless of which interactive session 70, 71 or 72 in Fig. 2A is run, the commands along with a V1, V2 or V"N" version indication are sent to the command analyzer 36, which then checks the commands for syntax and semantics in accordance with the command definition from the appropriate version library. As explained above, the version identification V1, V2 or V"N" is passed to the command analyzer and the analyzer is called by either QCL 74 or QCMD 76, command analyzer 36 searches the appropriate library or libraries 80, 81 or 82 for the command definition.

Command analyzer 36 uses the parameter definitions from the stored command in the appropriate library and the actual parameters in the command character string passed by QCL or QCMD. The analyzer checks the command string for correct semantics and syntax with the parameter definitions. If the string contains a error, an error message is returned to the QCL 74 or QCMD 76 for display at the users workstation. If the string is correct, the command analyzer builds a pointer table 84 which will be used by the command processing program to execute the command.

Pointer table 84 is built according to the predefined sequence of parameters, PARM 1 through PARM X, in the command definition for the command being analyzed. Each entry in the table will point to the storage location in memory work area 86 where the parameter information, received with the command character string or added by the command analyzer, is stored. Pointers to constant or default parameters are added to table 84 and parameter data is added to work area 86 in accordance with parameter definition from the library so that the command from the selected version is compatible with the command processing program.

After command analyzer 36 has built the pointer table, program control passes to the selected command processing program 16. When control is transferred, command analyzer program is dropped from an invocation stack of programs so all messages from the command processing program go to QCL or QCMD. The command processing program (CPP) retrieves the parameters pointed to by the pointer table 84 and executes the command. Then CPP returns appropriate messages to the QCL for display to the user at the workstation.

Another source of commands to be processed is stored programs. The source code for programs written for various versions of an operating system would be typically stored on disk files. In Fig. 2A, three source code versions of programs are indicated at 31, 32 and 33. They could be the same or different programs. The source statements at 31 are written for version 1, source statements at 32 are written for version 2, and source statements at 33 are written for version N program. Before these source code programs can be run they must be compiled.

To compile a program, the user enters the CRTCLPGM (create control language program) command specifying the parameter that identifies the source program to be compiled. The CRTCLPGM command version is identified by option tag being passed by the QCL or QCMD program through which the user entered the CRTCLPGM. The option tag also indicates the CRTCLPGM command processing program is to be executed.

As with any other command, command analyzer 36 retrieves the command definition for CRTCLPGM from the version ID in the option tag. The analyzer then builds the pointer table 84 and parameter data in work area 86 for the CRTCLPGM. When the pointer table and parameter data are complete, the CRTCLPGM program is called for execution. The parameter data for the CRTCLPGM command specifies a constant that indicates the version of the source statements file being compiled.

The CRTCLPGM command program is different from the other command processing programs 16 in that CRTCLPGM's program is the compiler program 34. Compiler 34 then runs using the pointer table and parameter data built from the parameters and parameter definitions for CRTCLPGM.

The flow chart for compiler 34 (CRTCLPGM command processing program) is shown in Fig. 5. The compiler at step 200 gets the input parameters from the work area using the pointer table. The parameters include :

° Name of Program 200A which is being created (usually same name as the source code file being compiled);

° Name of source file 200B whose code is being compiled;

° Version number or identifier 200C which indicates the version of commands to be used in compiling the source code for the program being created and compiled.

Compiler 34 opens 212 the source file 31, 32 or 33 identified by the 200B parameter. The compiler reads 214 the source file until a complete command (source statement) can be passed to the command analyzer. Decision 216 tests to see if the end of the source file has been reached. If not, program flow passes to step 218.

At 218 the single command read from the source file is moved into the temporary parameter storage area. The option is set to compile only and the command analyzer is called 220. The command analyzer scans the command character string and creates a parsed and validated form of the command that is returned to the compiler 34. If errors are found in the statement, the occurrence of an error is noted for future reference at steps 232 and 234 and decision 222 returns the flow to step 214 to read the next statement. If no errors were found by the command analyzer decision 222 branches the flow to step 224 where the compiler expands the parsed form of the command into program instructions for the command. The program instructions are then stored 225 at the compiled version 38, 39 or 40 of the program being created. In most cases, program instructions are simply the parsed form of the command.

The compiler continues to read 214 source statements until the end of file is detected for the source file. When end of file is detected 216, then the compiler closes 230 the source file. If decision 232 indicates there are errors in the source, a message is issued by step 234 to the caller, QCL or QCMD, and no program is created.

If no errors were detected during processing of the source, the compiler will create the program at step 236 using input parameter 200A as the name for the compiled program. The version ID 200C is also stored in the compiled program so that, when the program is called, it can pass the version ID to the command analyzer. Storing the version ID as a part of the program allows one version program to call another version program. Thus system will dynamically adapt to the version stored in the program.

When a program is selected for execution, the compiled version is run through the command analyzer again. This time, the option information indicates "execute." As each command is processed, the command analyzer 36 transforms the character string data, loads the parameter data in the work area 86, builds the pointer table 84 and calls the named command processing program 16.

Program control passes to the named command processing program 16. The command processing program (CPP) uses the pointer table, retrieves the parameters pointed to, and executes the command. Then CPP returns appropriate messages to the compiled program 38, 39 or 40 that is being run. When the CPP returns control to the compiled program, the next command is sent to the command analyzer for execution. However, if there is an error in execution, the message back to the compiled program may cause the program to send an error message back to QCL or QCMD for display to the user at the workstation.

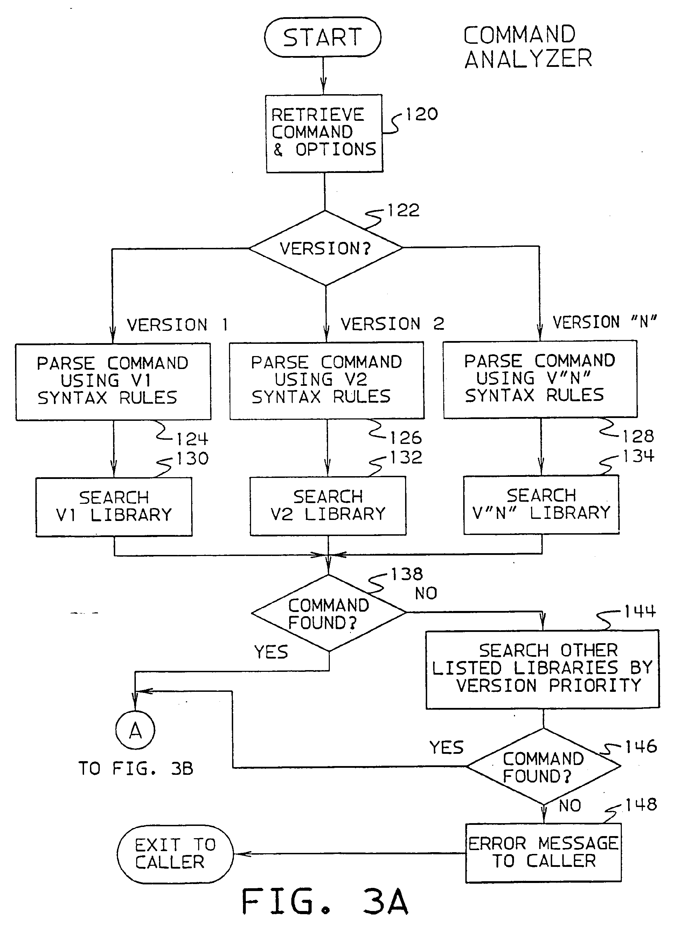

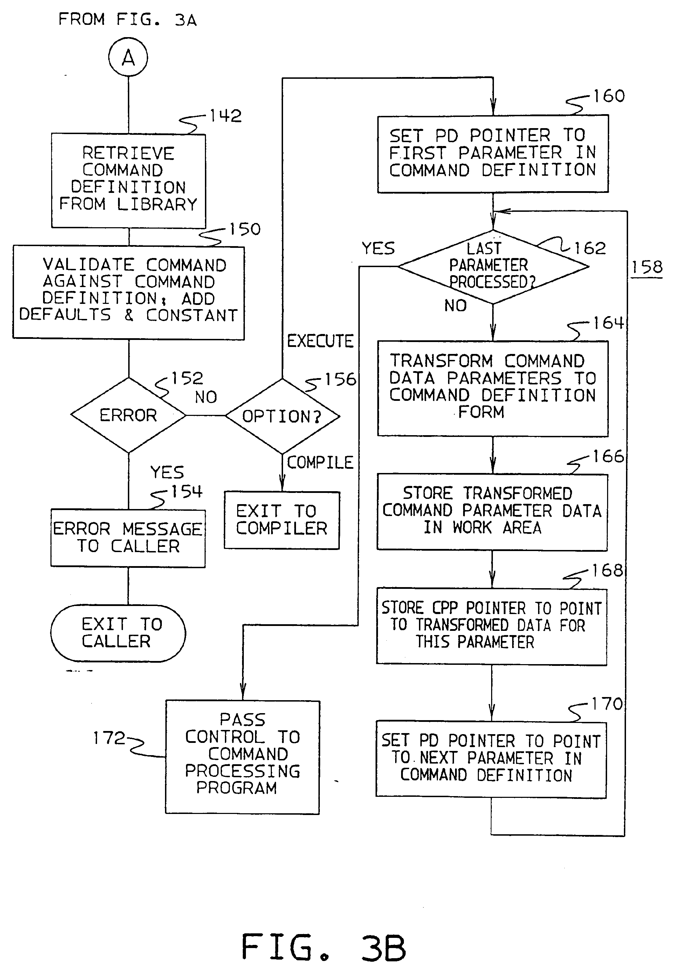

The operation of command analyzer program 36 is shown in more detail in Fig. 3A and 3B. The program starts by retrieving (120) the command character string and the option tags (version ID, compile, execute). Decision 122 branches the program flow according to the version ID to one of the parse routines 124, 126 or 128. The selected parse routine splits the command character string into words and interprets those words according the syntax rules of the selected version V1, V2 and V"N".

After the command has been parsed into its parameters, the program searches the appropriate version library (step 130, 132 or 134) for the command definition of the command being processed. If the command definition is found in the selected version library, decision 138 would branch program flow to step 142 in Fig. 3B which then retrieves the definition from the library. If the command definition is not found in the selected library, then decision 138 branches the program flow to search routine 144.

Search routine 144 searches for the command definition in various libraries. The libraries are searched sequentially according to their sequence in the library list. The libraries and the list are built by the user. The user may choose to have one list or a plurality of lists with each list having a different sequence of libraries. The list could be selected based on the version ID.

For example, a command indicated as from version 2 by decision 122 but not found in the version 2 library at step 132 could use search routine 144 to search libraries according the version priority -- V1 library, V"N" library, User library 1, User library 2, etc. This priority or sequence of listed libraries could be different for each version and could be selected as a function of version ID in the same way that decision 122 selected the first library to be searched.

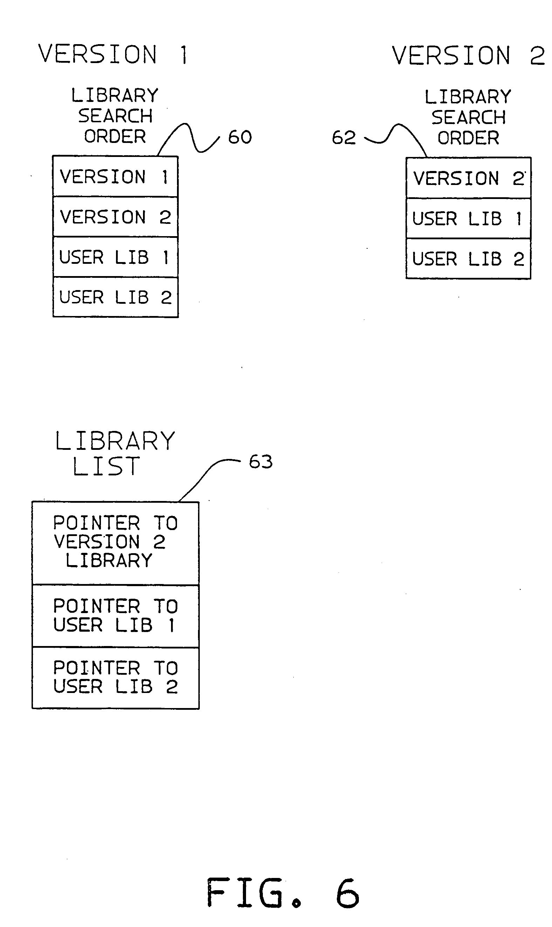

Logical search order for version libraries is shown in Fig. 6. When a program has a program attribute indicating that version 1 programs are to be run, the search order of the libraries is as indicated at 60. The version 1 library is first searched. If the command that is searched for is not found in the version 1 library 12, the version 2 library 14 is searched. Then, if still not found, a first user library is searched, then a second. A user library is a library which is specified by the user, and usually contains user application programs, files, commands, and other objects.

If the program attribute indicates that the program is a version 2 program, the library search order for that program is the order of libraries indicated at 62 in Fig. 6. Note that the first version of the command definitions is not searched for a version 2 program. This is because in the particular embodiment, some version 2 commands have the same name as the version 1 commands. In order to ensure that the version 2 command is actually processed, it is necessary to search the version 2 library first.

The search order of libraries is controlled by the first library specified by the version ID and searched at steps 130, 132 and 134 and by subsequent libraries in a library list. The library list 63 in Fig. 6 which is generated for each program. The library list in Fig. 6 is the same type of structure which was used on a System/38. It contains a list of the pointers to libraries to be used by the system when running the program it is associated with. The list is determined by the customer application.

Returning to Fig. 3A, if search routine 144 is successful, decision 146 branches program flow to step 142 in Fig. 3B to retrieve the command definition. If the search routine is not successful, program flow branches to step 148 which sends an error message back to the caller. The caller may be QCL, QCMD or the program being compiled or executed.

Fig. 3B shows how the command analyzer program processes the command character string after the analyzer has found the command definition. After retrieval of the definition at step 142, validation routine 150 checks the command against the definition. Validation consists of verifying each word of parameter data against the definition for that parameter in the command definition. As described earlier with reference to Fig. 1B, each parameter is defined by a keyword, length, data type, default or constant, and mapping logic. Validation also includes a check that all required parameters are specified and that no parameter is specified more than once.

Validation routine 150 checks each parameter in the command character string against the definition for that parameter. Routine 150 successively takes each parameter from the command definition and checks for the corresponding parameter in the command character string by looking for the parameter's keyword. If a keyword has no value entered with it, validation routine will designate the default value for that keyword from the parameter definition. If a keyword is missing from the command, the validation routine will insert from the command definition the default value for the missing parameter. Each parameter is temporarily stored in a sequence corresponding to the sequence of parameters in the command definition.

If the parameter data does not check out with its definition, then decision 152 branches the program to step 154. Step 154 sends an error message back to the calling program, and program control returns to the calling program.

If there is no error in the parameters of the command, decision 152 causes a branch to decision 156. Decision 156 will branch the program flow one of two ways depending on whether the option information passed with the command indicates the command is to be executed or compiled. If it is being compiled, program control returns to the compiler. If it is being executed, control passes to loop 158 that builds pointer table 84 (Fig. 2A).

Loop 158 transform the validated command character string, now including defaults and constants, into parameter data for use by the command processing program. Further the loop builds the pointer table to point to storage location of the data making up each parameter. Before entering the loop, the command analyzer program sets (160) its own pointer to point to the first parameter in the command definition. Decision 162 tests the pointer to see if the pointer indicates that the last parameter in the command has been processed. If not the program control passes to the transformation routine 164.

Transformation routine 164 retrieves the parameter definition pointed to and the corresponding validated value for the parameter as temporarily stored by the validation routine. The transformation routine 164 uses the parameter definition to convert the parameter's value to a form expected by the command processing program as indicated by the command definition. Based on the definition of the parameter, the parameter data may be padded with blanks so it has the correct length, or it may be converted to another form of data based on the mapping logic. Thus, each parameter definition causes transformation routine 164 to generate transformed parameter data for each parameter called for in the command definition.

After the transformed parameter data is generated, it is stored (166) in work area 86 (Fig. 2A) of memory. Thereafter, the command analyzer program generates and stores (168) a command processing program (CPP) pointer in pointer table 84 (Fig. 2A). The parameter is now ready for the command processing program so the next parameter can be processed by loop 158.

To get to the next parameter definition, each parameter definition ends with a pointer to the beginning of the next parameter definition. In loop 158 at step 170, the program get the next parameter definition (PD) pointer and the program loops back to decision 162. If the PD pointer is zero, decision 162 knows the last parameter definition has been processed and program control is passed (172) from the command analyzer program to the command processing program. If the PD pointer points to the next parameter definition, transform routine 164 again proceeds to convert the parameter from the character string to a form compatible with the command processing program.

Each command processing program is different depending upon the functions it is intended to execute.

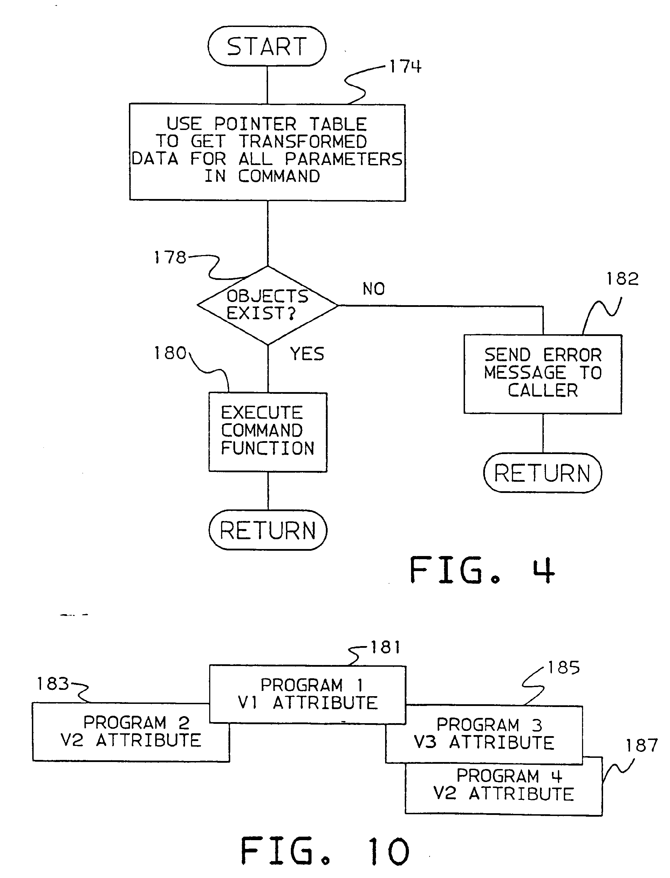

Thus a general flow chart of these programs can only be done at a high level as illustrated in Fig. 4. The CPP uses the pointer table to get the transformed data (174). This is done for all parameters in the command. After all the transformed parameter data has been retrieved, decision 178 determines if all the objects, such as devices, files, commands, programs, etc., exist. If they do, program flow branches to step 180. The command is then executed using all of the parameter data. Thereafter program control returns to the command source, QCL, QCMD or the compiled program being run. If one or more objects does not exist in the system, decision 178 branches the flow to step 182. Step 182 sends an error message back to command execution requester, QCL, QCMD or the compiled program.

Description of Selected Version 1 and Version 2 Commands :

Version 1:     CNLWTR (Cancel Writer) Command
Version 2:     ENDWTR (End Writer) Command

When the version 1 command CNLWTR (Cancel Writer) indicated at 18 (Fig. 1A), is used by a program or interactive user session, its command definition, see Fig. 7A, is accessed from the version 1 library 12, and sent on to the command processing program 16A for processing. The command processing program is independent of the name of the command, so either name, CNLWTR or ENDWTR performs the same functions.

The CNLWTR and ENDWTR command definitions are shown in Fig. 7A and 7B. The purpose of these commands is to end spooling writers and make their associated output devices available to the system. In both versions, a writer can be ended immediately or in a controlled manner by use of the OPTION keyword which has potential values of CNTRLD (controlled), IMMED (immediate) and PAGEEND. If ended immediately, the writer stops writing the file and the file is made available again on the output queue. If ended in a controlled manner, the writer finishes writing the current file (or a copy of a file), or it finishes printing a page of the file, before it is ended. The version 2 command ENDWTR has added function. It can now specify that all writers on the system should be ended, or a tuning parameter can be used to end some of the writers. The version 1 command could only identify the writer-name as a value for the keyword WTR.

Fig. 7C illustrates the syntax of the Version 1 CNLWTR. WTR is a required parameter and the user must enter a device name after the keyword WTR when using the command. Option is an optional parameter which uses the default value *CNTRLD when the user does not enter the key word.

Fig. 7D illustrates the syntax of the Version 2 ENDWTR. In addition to the name change, more values are available for the WTR parameter in Version 2.

Version 1:     CRTJOBQ (Create Job Queue) Command
Version 2:     CRTJOBQ (Create Job Queue) Command

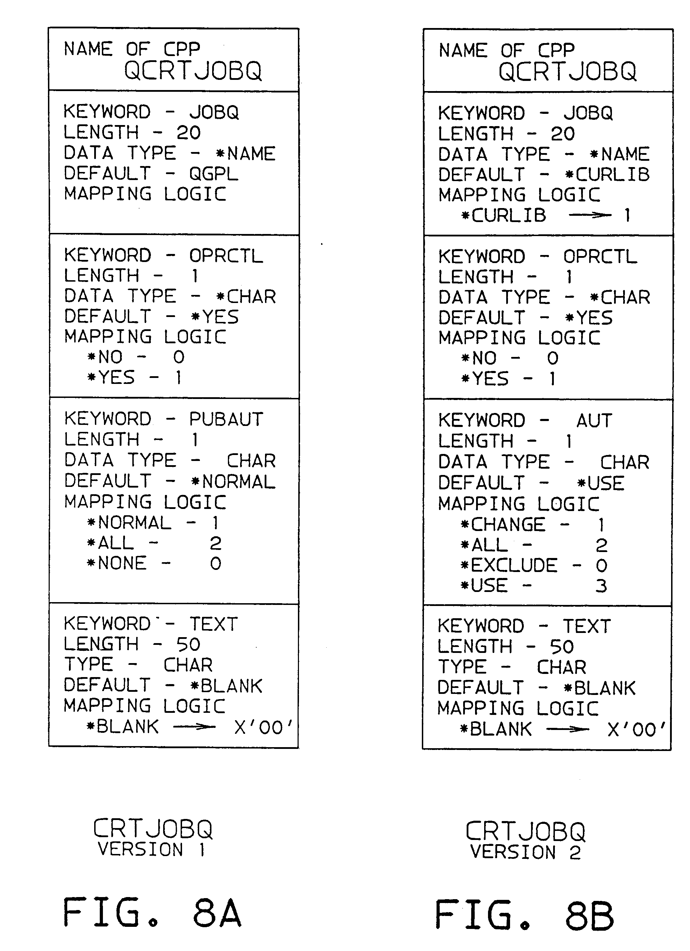

A pair of commands having the name CRTJOBQ (Create Job Queue) are also illustrated in the command definition libraries in Fig. 1A at 22 and 24 in their respective libraries. While the name is the same for both versions, the parameters are quite different as can be seen in Fig. 8A and 8B. A complete description of the version 1 command and its parameters appears in the above referenced System/38 manual.

The CRTJOBQ command creates a new job queue. A job queue contains entries for jobs that are to be processed by the system. Some of the commands which manipulate jobs in the queue are Submit Job (SBMJOB), Submit Data Base Jobs (SBMDBJOB), Submit Diskette Jobs (SBMDKTJOB), and Transfer Job (TFRJOB). In Fig. 8A and 8B, the command definitions for both versions of the CRTJOBQ command show the differences. The first change to be noted is that the keyword "job-queue-name" appears after the keyword value "library-name/". Thus, the name of the job queue in the version 1 commands looks like "OBJ.LIB", while in the version 2 command set, the name of the queue looks like "LIB/OBJ". The difference in the name syntax is handled by the different parse routines (124,126) in Fig. 3A.

The default value for the library name is QGPL in version 1 and CURLIB in version 2. Further changes were made in optional keywords and their values. The keyword PUBAUT in version 1 was changed to AUT in version 2. Note that the values were also changed, with only the ALL value being the same between them. The parameters are passed to the command processing program positionally without the keyword names as indicated in Fig. 12. Thus, the keyword names are independent of the command processing program.

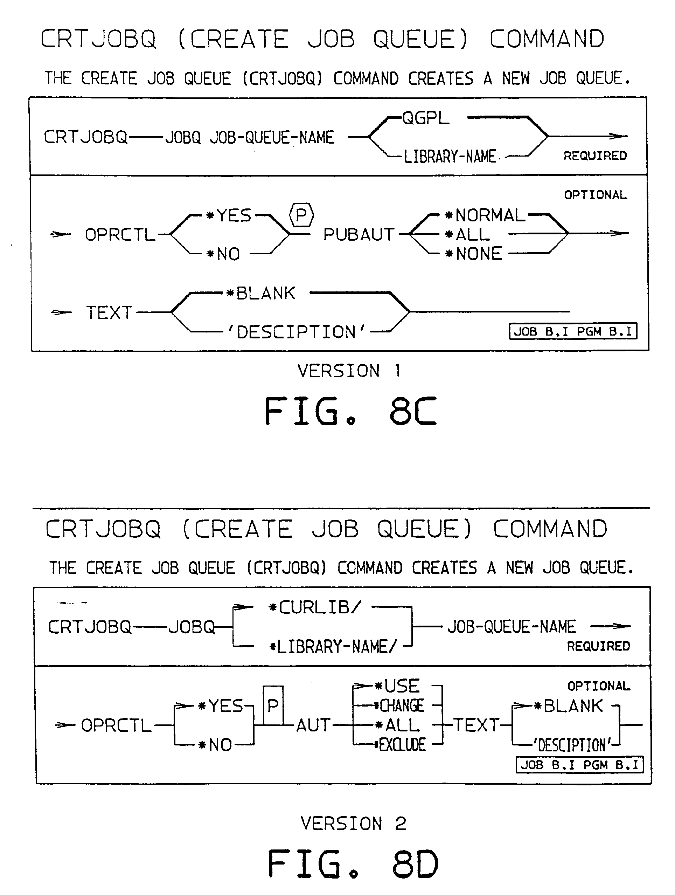

Fig. 8C and 8D show the differences in syntax between the version 1 and version 2 CRTJOBQ command. The default for library changed from QGPL to *CURLIB. Library name convention changed from XXX.lib to lib/xxx. The keyword PUBAUT changed to AUT. Finally, the number of values from PUBAUT to AUT also changed.

Version 1:     CLRDKT (Clear Diskette) Command
Version 2:     CLRDKT (Clear Diskette) Command

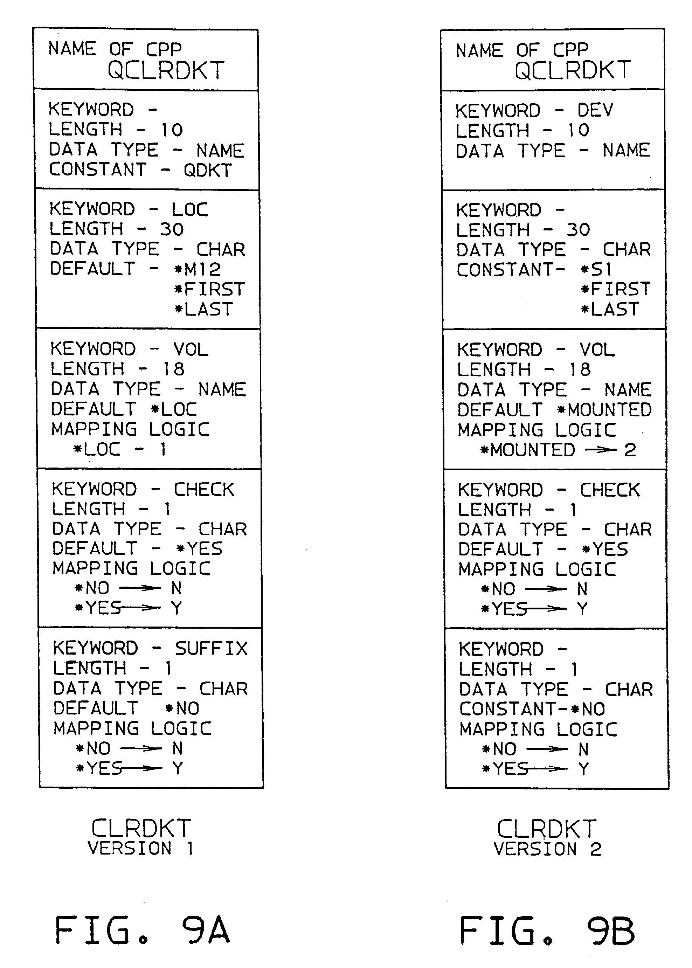

A pair of commands having the name CLRDKT (Clear Diskette) are also illustrated in the command definition libraries at 25 and 26 (Fig. 1A) in their respective libraries. While the name is the same for both versions, the parameters are quite different as can be seen in their command definitions in Fig. 9A and 9B. Constants were used in the second version of the command to make the number of parameters compatible for running on command processing program 16C (Fig. 1A). The constants are added at design time, and are transparent to the user. This allows the "LOC and SUFFIX" keywords to be hidden on the second version. In other words, an application, which contains several programs written in the version 1 command set will operate without change in a computer having both the version 1 and version 2 command sets.

The version 1 CLRDKT command deletes all files, active and inactive, from one or more diskettes by deleting data file identifiers from the diskette label area on each diskette. In the version 2 command, the keywords LOC and SUFFIX which appear in the version 1 command were dropped. The keyword LOC is given the constant of *S1 (meaning slot 1, a physical location in the computer system) in its internal description in the version 2 library. The keyword SUFFIX is given a constant of *NO in the version 2 command. The command processing program corresponding to the command will expect 5 parameters, DEV, LOC, VOL, CHECK and SUFFIX and therefore these are the five parameters in the command definitions in Fig. 9A and 9B.

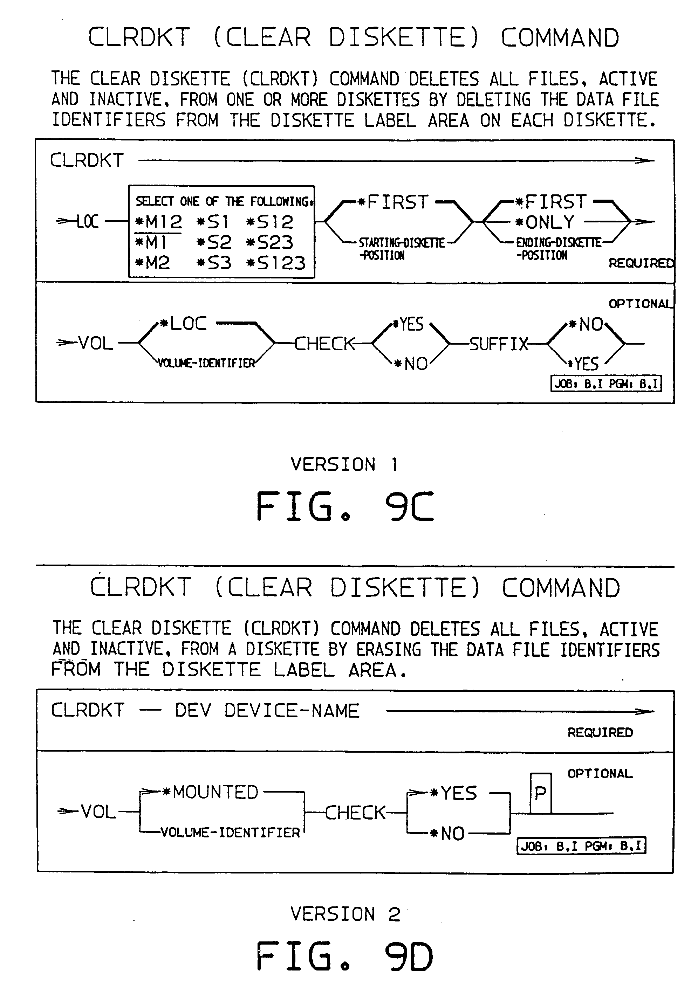

Fig. 9C and 9D show the differences in syntax between the version 1 and version 2 CLRDKT command. Keyword DEV only exists in version 2, and keywords LOC and SUFFIX only exist in version 1. Also there are different defaults on VOL keyword. Also note that the constants added in the version 2 command definition Fig. 9B are not visible to the user.

The following is a simplified version of the CLRDKT command for both versions. The use of constants is shown. The "---" in Table 1 below shows where user input is allowed.

```
       Keyword Version 1          Version 2


       DEV     CONSTANT-QDKT          ----

       LOC     ---                CONSTANT=(*S1 *FIRST *LAST)

       VOL     ---                ---

       SUFFIX  ---                CONSTANT=*NO
```

The details of what is passed for each parameter are described in the IBM System/38 Programmers Guide (1986) Tenth edition, chapter 14. An example for the CLRDKT command follows below. This example uses the keyword SPCVAL (special value) to identify mapping logic. A special value, mapping logic, shows how external terms are mapped to internal values expected by a program.

SPCVAL((*LAST -5) (*ONLY -3))

When *LAST is specified the program gets a -5

When *ONLY is specified the program gets a -3

The command processing program is independent of the words *LAST and *ONLY. The use of special value allows the external terms to change without affecting the application program. All of the mapping of parameters and special values are handled by the command analyzer so that the parameters the command processing program gets are converted values based on the mapping logic.

The example for version 1 of the CLRDKT command follows :

```
CLRDKT:    CMD
           PARM   KWD(DEV) +
                  TYPE(*NAME) LEN(10) MIN(1) MAX(1) +
           PARM   KWD(LOC) +
                  TYPE(E1)
           PARM   KWD(VOL) +
                  TYPE(*CHAR) LEN(8) RSTD(*NO) +
                  DFT(*MOUNTED)
           PARM   KWD(CHECK) +
                  TYPE(*CHAR) LEN(1)
                  DFT(*YES) SPCVAL((*YES Y)  (*NO N))
           PARM   KWD(SUFFIX) +
                  TYPE(*CHAR) LEN(1)
                  CONSTANT(*NO)
                  SPCVAL((*NO N)   (*YES Y))
E1         ELEM   TYPE(*CHAR) LEN(5)
                  CONSTANT(*S1)
           ELEM   TYPE(*INT2) RSTD(*NO) +
                  SPCVAL((*FIRST -4)) CONSTANT(*FIRST)
           ELEM   TYPE(*INT2) RSTD(*NO)
                  SPCVAL((*LAST -5) (*ONLY -3) +
                  CONSTANT(*LAST)
```

For version 2 of the CLRDKT command :

```
CLRDKT:    CMD
           PARM   KWD(DEV) +
                  TYPE(*NAME) LEN(10) +
                  CONSTANT(QDKT)
           PARM   KWD(LOC) +
                  TYPE(E1)
           PARM   KWD(VOL) +
                  TYPE(*CHAR) LEN(8) DFT(*LOC)
                  SPCVAL((*LOC *MOUNTED))
           PARM   KWD(CHECK) +
                  TYPE(*CHAR) LEN(1) +
                  DFT(*YES) SPCVAL((*YES Y) (*NO N))
           PARM   KWD(SUFFIX) +
```

```
                    TYPE(*CHAR) LEN(1) +
                    RSTD(*YES) DFT(*NO)
                    SPCVAL((*NO N)   (*YES Y))
        E1         ELEM  TYPE(*CHAR) LEN(5) MIN(0) MAX(1) +
                    VALUES(8M12 *M1 *M2 *S1 *S2 *S3 *S12
                         *S23 *S123)
                   ELEM  TYPE(*INT2) RSTD(*NO) +
                    DFT(*FIRST) RNAGE(1 10)
                    SPCVAL((*FIRST -4))
                   ELEM  TYPE(*INT2) RSTD(*NO) +
                    DFT(*LAST) RANGE(1 10)
                       SPCVAL((*LAST -5)  (*ONLY-3)
```

Referring to Fig. 10, the invention is easily expandable into more than two versions of command sets. Three or more versions can be accommodated by having a large enough program attribute field. The logical arrangement of the versions of libraries permits searching any version library first. Since each program has its own attribute, an application can have programs using many different versions of command sets.

In Fig. 10, an application is shown having an entry program using version 1, at block 181. The entry program can invoke program 183, which has a program attribute indicating that it is a version 2 program. A further program 185 invokable by program 181 is using version 3. Program 185 can itself invoke a program 187 which is written in version 2. There is no conceptual limit to the nesting of programs written in different command sets using the present invention.

A huge financial investment in an application written in version 1 need not be converted to version 2 or 3. It can even have additional programs added to it which are written in a version which contains more advanced function. At the users leisure, the application can be rewritten one program at a time, thus gaining improved performance in steps, rather than revising the entire application all at one time.

## Claims

1. A dynamically adaptive computer system for running a plurality of programs which are compatible with multiple versions (V1, V2) of system commands (11) comprising :
   means (12) for storing a first version of system command definitions;
   means (14, 15) for storing at least a second version of system command definitions;
   means (74, 76) within programs for indicating the desired version of system commands required by said programs;
   means for retrieving command definitions from the means for storing the versions of command definitions, the version of command definition which is retrieved being dependent on the means for indicating the desired version of system commands characterized in that it further comprises :
   analyzing means (36), responsive to system commands from the program being executed and responsive to retrieved command definitions, for transforming the system commands to a universal format ; and
   command processing means (16) responsive to said analyzing means for processing the transformed commands so that all versions of the commands are executed by the command processing means.

2. The dynamically adaptive computer system of claim 1, characterized in that system commands are represented as one or more parameters, each parameter including :
   a keyword which specifies a particular action; and
   at least one value associated with the keyword for defining options associated with the keyword.

3. The dynamically adaptive computer system of claim 2, characterized in that the number of parameters is variable between each version of a system command.

4. The dynamically adaptive computer system of claim 3, characterized in that the versions of command definitions contain constants for each keyword which does not have a counterpart parameter in the other versions of a command.

5. The dynamically adaptive computer system of claim 4, characterized in that said means for storing the versions of command definitions passes the parameters of the definitions in a predefined sequence to the analyzing means.

6. The dynamically adaptive computer system of anyone of claims 1-5, characterized in that the versions of the command definitions are stored in a format comprising :
a name corresponding to a program in the command processing means; and
command parameters which identify desired results of processing the command.

7. The dynamically adaptive computer system of claim 6, characterized in that the name of the program in the command processing means is the same for more than one version of a command.

8. The dynamically adaptive computer system of claim 7, characterized in that the command definition of the several counterpart commands in the various versions of a command have the same number of parameters.

9. The dynamically adaptive computer system of claim 1, characterized in that a plurality of programs comprising an application program each specify its desired version of commands so that the application program is processed using different versions of commands dependent on the particular program being processed.

**Patentansprüche**

1. Dynamisch anpaßbares Computersystem zur Ausführung einer Vielzahl von Programmen, die mit mehrfachen Versionen (V1, V2) von Systembefehlen (11) kompatibel sind, das folgendes umfaßt:
Mittel (12) zum Speichern einer ersten Version von Systembefehlsdefinitionen;
Mittel (14, 15) zum Speichern mindestens einer zweiten Version von Systembefehlsdefinitionen;
Mittel (74, 76) innerhalb von Programmen zum Anzeigen der gewünschten Version der Systembefehle, die von den Programmen gefordert werden;
Mittel zum Abfragen von Befehlsdefinitionen von den Mitteln zum Speichern der Versionen der Befehlsdefinitionen, wobei die abgefragte Version der Befehlsdefinition von dem Mittel zum Anzeigen der gewünschten Version der Systembefehle abhängt, dadurch gekennzeichnet, daß es weiterhin umfaßt:
Analysemittel (36), die auf Systembefehle von dem gerade ausgeführten Programm reagieren und auf abgefragte Befehlsdefinitionen reagieren, um die Systembefehle in ein universelles Format umzuwandeln; und
Befehlsverarbeitungsmittel (16), die auf die Analysemittel reagieren, um die umgewandelten Befehle zu verarbeiten, so daß alle Versionen der Befehle von den Befehlsverarbeitungsmitteln ausgeführt werden.

2. Dynamisch anpaßbares Computersystem nach Anspruch 1, dadurch gekennzeichnet, daß Systembefehle als ein oder mehrere Parameter dargestellt werden, wobei jeder Parameter folgendes umfaßt:
ein Schlüsselwort, das eine spezielle Aktion kennzeichnet; und
mindestens einen dem Schlüsselwort zugeordneten Wert zur Definition von Optionen, die dem Schlüsselwort zugeordnet sind.

3. Dynamisch anpaßbares Computersystem nach Anspruch 2, dadurch gekennzeichnet, daß die Anzahl der Parameter bei jeder Version eines Systembefehls variabel ist.

4. Dynamisch anpaßbares Computersystem nach Anspruch 3, dadurch gekennzeichnet, daß die Versionen der Befehlsdefinitionen Konstanten für jedes Schlüsselwort enthalten, das keinen entsprechenden Parameter in den anderen Versionen eines Befehls hat.

5. Dynamisch anpaßbares Computersystem nach Anspruch 4, dadurch gekennzeichnet, daß das Mittel zum Speichern der Versionen der Befehlsdefinitionen die Parameter der Definitionen in einer vordefinierten Reihenfolge an das Analysemittel weiterleitet.

**6.** Dynamisch anpaßbares Computersystem nach irgendeinem der Ansprüche 1-5, dadurch gekennzeichnet, daß die Versionen der Befehlsdefinitionen in einem Format gespeichert werden, das folgendes umfaßt: einen Namen, der einem Programm in dem Befehlsverarbeitungsmittel entspricht; und Befehlsparameter, die gewünschte Ergebnisse der Verarbeitung des Befehls kennzeichnen.

**7.** Dynamisch anpaßbares Computersystem nach Anspruch 6, dadurch gekennzeichnet, daß der Name des Programms in dem Befehlsverarbeitungsmittel für mehr als eine Version eines Befehls derselbe ist.

**8.** Dynamisch anpaßbares Computersystem nach Anspruch 7, dadurch gekennzeichnet, daß die Befehlsdefinition mehrerer entsprechender Befehle in den verschiedenen Versionen eines Befehls dieselbe Anzahl Parameter hat.

**9.** Dynamisch anpaßbares Computersystem nach Anspruch 1, dadurch gekennzeichnet, daß von einer Vielzahl von Programmen, die ein Anwendungsprogramm umfassen, jedes seine gewünschte Version der Befehle kennzeichnet, so daß das Anwendungsprogramm unter Verwendung verschiedener Versionen der Befehle, abhängig von dem speziellen gerade ausgeführten Programm, ausgeführt wird.

## Revendications

**1.** Système informatique à adaptation dynamique pour exécuter une pluralité de programmes compatibles avec des versions multiples (V1, V2) de commandes système (11), comprenant :
un élément (12) pour mémoriser une première version de définitions de commande système;
des éléments (14, 15) pour mémoriser au moins une deuxième version de définitions de commande système;
des éléments (74, 76) dans des programmes pour indiquer la version voulue des commandes système requise par les dits programmes;
un élément pour extraire des définitions de commande des éléments de mémorisation de versions de définitions de commande, la version de définitions de commande extraite dépendant des éléments pour indiquer la version voulue de commandes système, caractérisé en ce qu'il comprend, de plus :
un élément analyseur (36), sensible aux commandes système provenant du programme en cours d'exécution et aux définitions de commande extraites, pour transformer les commandes système en un format universel; et
un élément de traitement de commandes (16), sensible au dit élément analyseur, pour traiter les commandes transformées en sorte que toutes les versions des commandes soient exécutables par l'élément de traitement de commandes.

**2.** Système informatique à adaptation dynamique selon la revendication 1, caractérisé en ce que les commandes système sont représentées par un ou plusieurs paramètres, chaque paramètre comprenant :
un mot-clé qui spécifie une action particulière; et
au moins une valeur associée au mot-clé pour définir des options associées au dit mot-clé.

**3.** Système informatique à adaptation dynamique selon la revendication 2, caractérisé en ce que le nombre de paramètres varie entre chaque version d'une commande système.

**4.** Système informatique à adaptation dynamique selon la revendication 3, caractérisé en ce que les versions de définitions de commande contiennent des constantes pour chaque mot-clé qui n'a pas de paramètre équivalent dans les autres versions d'une commande.

**5.** Système informatique à adaptation dynamique selon la revendication 4, caractérisé en ce que les dits éléments pour mémoriser les versions de définitions de commande transmettent les paramètres des définitions dans un ordre prédéterminé à l'élément analyseur.

**6.** Système informatique à adaptation dynamique selon l'une quelconque des revendications 1 à 5, caractérisé en ce que les versions des définitions de commande sont mémorisées dans un format comprenant :
un nom correspondant à un programme dans l'élément de traitement de commandes; et
des paramètres de commande qui identifient les résultats voulus du traitement de la commande.

**7.** Système informatique à adaptation dynamique selon la revendication 6, caractérisé en ce que le nom du programme dans l'élément de traitement de commandes est le même pour plus d'une version d'une commande.

8. Système informatique à adaptation dynamique selon la revendication 7, caractérisé en ce que les définitions de commande des différentes commandes équivalentes de diverses versions d'une commande ont le même nombre de paramètres.

9. Système informatique à adaptation dynamique selon la revendication 1, caractérisé en ce qu'une pluralité de programmes comprenant chacun un programme d'application spécifient leur version de commandes spécifique pour permettre le traitement du programme d'application en utilisant différentes versions de commandes en fonction du programme particulier en cours de traitement.

VERSION 1 LIBRARY ⟋12

COMMAND DEFINITIONS

CNLWTR — 18
CRTJOBQ — 22
CLRDKT — 25
CRTCLPGM — 27

VERSION 2 LIBRARY ⟋14

COMMAND DEFINITIONS

ENDWTR — 20
CRTJOBQ — 24
CLRDKT — 26
CRTCLPGM — 28

COMMANDS

11

COMMAND DATA & VERSION I.D.

VERSION N LIBRARY ⟋15

COMMAND DEFINITIONS

COMMAND ANALYZER PROGRAM

COMMAND DEFINITIONS

COMMAND DEFINITIONS

STOPWTR — 21
CRTJOBQ — 23
CLRDKT — 29
CRTCLPGM — 30

36

TRANSFORMED COMMAND DATA

34

CREATE CONTROL LANGUAGE PROGRAM

16C

CLEAR DISKETTE

16A

CREATE JOB QUEUE

END WRITER

NAMED COMMAND PROCESSING PROGRAMS

16

FIG. 1A

## COMMAND DEFINITION

```
   NAME OF COMMAND
PROCESSING PROGRAM
KEYWORD:        _____
LENGTH:         _____          PARM 1
DATA TYPE:      _____
DEFAULT:    XXXX _____
MAPPING LOGIC:  _____
                _____

KEYWORD:        _____
LENGTH:         _____
DATA TYPE:      _____          PARM 2
CONSTANT:   XXXX _____
MAPPING LOGIC:  _____
                _____
                    •
                    •
                    •

KEYWORD:        _____
LENGTH:         _____
DATA TYPE:      _____          PARM "X"
MAPPING LOGIC:  _____

LAST PARAMETER TAG
```

## FIG. 1B

## COMMAND CHARACTER STRING

NAME  KEYWORD(VALUE),  KEYWORD(VALUE), .... KEYWORD(VALUE),

PARM 1        PARM "X"          PARM 2

## FIG. 1C

FIG. 2A

# QCL/QCMD PROGRAMS

START

RECIEVE MESSAGE — 102

MESSAGE IN QUEUE — 104

OTHER MESSAGE

NO

COMMAND

DISPLAY MESSAGE — 116

PASS COMMAND & OPTIONS TO COMMAND ANALYZER — 112

DISPLAY COMMAND ENTRY SCREEN — 106

WAIT FOR USER INPUT — 107

STORE USER INPUT AS COMMAND — 108

112A

COMMAND STRING

OPTIONS — VERSION I.D.
— EXECUTE OR COMPILE

112B

CALL COMMAND ANALYZER — 114

# FIG. 2B

START

COMMAND
ANALYZER

RETRIEVE
COMMAND
& OPTIONS ⟜120

VERSION? ⟜122

VERSION 1

VERSION 2

VERSION "N"

PARSE COMMAND
USING V1
SYNTAX RULES ⟜124

PARSE COMMAND
USING V2
SYNTAX RULES ⟜126

PARSE COMMAND
USING V"N"
SYNTAX RULES ⟜128

SEARCH
V1 LIBRARY ⟜130

SEARCH
V2 LIBRARY ⟜132

SEARCH
V"N" LIBRARY ⟜134

COMMAND
FOUND? ⟜138

NO

YES

SEARCH OTHER
LISTED LIBRARIES BY
VERSION PRIORITY ⟜144

A

TO FIG. 3B

YES

COMMAND
FOUND? ⟜146

NO ⟜148

EXIT TO
CALLER

ERROR MESSAGE
TO CALLER

FIG. 3A

FROM FIG. 3A

FIG. 3B

20

START

174

USE POINTER TABLE
TO GET TRANSFORMED
DATA FOR ALL PARAMETERS
IN COMMAND

178

OBJECTS
EXIST?   NO

182

180   YES

SEND ERROR
MESSAGE TO
CALLER

EXECUTE
COMMAND
FUNCTION

RETURN

RETURN

FIG. 4

181

PROGRAM 1
V1 ATTRIBUTE

183

185

PROGRAM 2
V2 ATTRIBUTE

PROGRAM 3
V3 ATTRIBUTE

187

PROGRAM 4
V2 ATTRIBUTE

FIG. 10

21

START

GET PARAMETERS — 200
- FILE NAME — 200B
- PGM NAME — 200A
- :
- VERSION I.D. — 200C

OPEN SOURCE FILE — 212

READ SOURCE STMT & PASS TO COMMAND ANALYZER — 214

216 — END OF FILE?

NO

PASS CMD FROM SOURCE TO CA — 218

CALL CA
PARSED FORM RETURNED — 220

YES — ERRORS FOUND? — 222

NO

EXPAND TO PROGRAM INST. — 224

STORE PROGRAM INST. — 225

YES — CLOSE SOURCE FILE — 230

232 — ERRORS IN SOURCE?

NO

YES

SEND ERROR MESSAGE — 234

CREATE PROGRAM & ASSIGN NAME — 236

RETURN

RETURN

FIG. 5

VERSION 1

LIBRARY
SEARCH
ORDER 60

| VERSION 1 |
| VERSION 2 |
| USER LIB 1 |
| USER LIB 2 |

VERSION 2

LIBRARY
SEARCH
ORDER 62

| VERSION 2 |
| USER LIB 1 |
| USER LIB 2 |

LIBRARY
LIST 63

| POINTER TO VERSION 2 LIBRARY |
| POINTER TO USER LIB 1 |
| POINTER TO USER LIB 2 |

# FIG. 6

```
┌─────────────────────────┐   ┌─────────────────────────┐
│ NAME OF CPP-            │   │ NAME OF CPP-            │
│       QCNLWTR          │   │       QCNLWTR          │
├─────────────────────────┤   ├─────────────────────────┤
│ KEYWORD - WTR          │   │ KEYWORD - WTR          │
│ LENGTH - 10            │   │ LENGTH - 10            │
│ DATA TYPE - *NAME      │   │ DATA TYPE - *NAME      │
│ MAPPING LOGIC          │   │ MAPPING LOGIC          │
│                         │   │    *ALL     1          │
│                         │   │    *SYSVAL 2           │
├─────────────────────────┤   ├─────────────────────────┤
│ KEYWORD - OPTION       │   │ KEYWORD - OPTION       │
│ LENGTH - 1             │   │ LENGTH - 1             │
│ DATA TYPE - CHAR       │   │ DATA TYPE - CHAR       │
│ MAPPING LOGIC          │   │ MAPPING LOGIC          │
│    *CNTRLD     1       │   │    *CNTRLD     1       │
│    *IMMED      2       │   │    *IMMED      2       │
│    *PAGE END 3         │   │    *PAGE END 3         │
└─────────────────────────┘   └─────────────────────────┘
```

CNLWTR  
VERSION 1

ENDWRT  
VERSION 2

FIG. 7A

FIG. 7B

## CNLWTR (CANCEL WRITER) COMMAND

THE CANCEL WRITER (CNLWTR) COMMAND TERMINATES THE SPECIFIED SPOOLING WRITER AND MAKES ITS ASSOCIATED OUTPUT DEVICE AVAILABLE TO THE SYSTEM.

VERSION 1

# FIG. 7C

## ENDWTR (END WRITER) COMMAND

THE END WRITER (ENDWTR) COMMAND ENDS THE SPECIFIED SPOOLING WRITER AND MAKES ITS ASSOCIATED OUTPUT DEVICE AVAILABLE TO THE SYSTEM.

VERSION 2

# FIG. 7D

NAME OF CPP
    QCRTJOBQ

KEYWORD - JOBQ
LENGTH - 20
DATA TYPE - *NAME
DEFAULT - QGPL
MAPPING LOGIC

KEYWORD - OPRCTL
LENGTH -  1
DATA TYPE - *CHAR
DEFAULT - *YES
MAPPING LOGIC
   *NO -  0
   *YES - 1

KEYWORD - PUBAUT
LENGTH -  1
DATA TYPE -  CHAR
DEFAULT - *NORMAL
MAPPING LOGIC
   *NORMAL - 1
   *ALL -    2
   *NONE -   0

KEYWORD - TEXT
LENGTH - 50
TYPE -  CHAR
DEFAULT - *BLANK
MAPPING LOGIC
   *BLANK ⟶ X'00'

CRTJOBQ
VERSION 1

FIG. 8A

NAME OF CPP
    QCRTJOBQ

KEYWORD - JOBQ
LENGTH - 20
DATA TYPE - *NAME
DEFAULT - *CURLIB
MAPPING LOGIC
   *CURLIB ⟶ 1

KEYWORD - OPRCTL
LENGTH -  1
DATA TYPE - *CHAR
DEFAULT - *YES
MAPPING LOGIC
   *NO -  0
   *YES - 1

KEYWORD -  AUT
LENGTH -  1
DATA TYPE -  CHAR
DEFAULT -  *USE
MAPPING LOGIC
   *CHANGE -  1
   *ALL -     2
   *EXCLUDE - 0
   *USE -     3

KEYWORD - TEXT
LENGTH - 50
TYPE -  CHAR
DEFAULT - *BLANK
MAPPING LOGIC
   *BLANK ⟶ X'00'

CRTJOBQ
VERSION 2

FIG. 8B

# CRTJOBQ (CREATE JOB QUEUE) COMMAND

THE CREATE JOB QUEUE (CRTJOBQ) COMMAND CREATES A NEW JOB QUEUE.

CRTJOBQ——JOBQ JOB-QUEUE-NAME ——⟨ QGPL / LIBRARY-NAME. ⟩——→ REQUIRED

➤ OPRCTL ——⟨ *YES / *NO ⟩ ⓟ PUBAUT ——⟨ *NORMAL / *ALL / *NONE ⟩——→ OPTIONAL

➤ TEXT ——⟨ *BLANK / 'DESCIPTION' ⟩———— JOB B.I PGM B.I

VERSION 1

# FIG. 8C

# CRTJOBQ (CREATE JOB QUEUE) COMMAND

THE CREATE JOB QUEUE (CRTJOBQ) COMMAND CREATES A NEW JOB QUEUE.

CRTJOBQ——JOBQ ——⟨ *CURLIB/ / *LIBRARY-NAME/ ⟩—— JOB-QUEUE-NAME ——→ REQUIRED

➤ OPRCTL ——⟨ *YES / *NO ⟩ ⓟ AUT ——⟨ *USE / *CHANGE / *ALL / *EXCLUDE ⟩—— TEXT ——⟨ *BLANK / 'DESCIPTION' ⟩ OPTIONAL

JOB B.I PGM B.I

VERSION 2

# FIG. 8D

```
NAME OF CPP
    QCLRDKT

KEYWORD -
LENGTH - 10
DATA TYPE - NAME
CONSTANT - QDKT

KEYWORD - LOC
LENGTH - 30
DATA TYPE - CHAR
DEFAULT - *M12
           *FIRST
           *LAST

KEYWORD - VOL
LENGTH - 18
DATA TYPE - NAME
DEFAULT *LOC
MAPPING LOGIC
   *LOC - 1

KEYWORD - CHECK
LENGTH - 1
DATA TYPE - CHAR
DEFAULT - *YES
MAPPING LOGIC
   *NO ——> N
   *YES——> Y

KEYWORD - SUFFIX
LENGTH - 1
DATA TYPE - CHAR
DEFAULT  *NO
MAPPING LOGIC
   *NO ——> N
   *YES——> Y
```

CLRDKT
VERSION 1

FIG. 9A

```
NAME OF CPP
    QCLRDKT

KEYWORD - DEV
LENGTH - 10
DATA TYPE - NAME

KEYWORD -
LENGTH - 30
DATA TYPE - CHAR
CONSTANT- *S1
          *FIRST
          *LAST

KEYWORD - VOL
LENGTH - 18
DATA TYPE - NAME
DEFAULT *MOUNTED
MAPPING LOGIC
   *MOUNTED —> 2

KEYWORD - CHECK
LENGTH - 1
DATA TYPE - CHAR
DEFAULT - *YES
MAPPING LOGIC
   *NO ——> N
   *YES——> Y

KEYWORD -
LENGTH - 1
DATA TYPE - CHAR
CONSTANT-*NO
MAPPING LOGIC
   *NO ——> N
   *YES——> Y
```

CLRDKT
VERSION 2

FIG. 9B

# CLRDKT (CLEAR DISKETTE) COMMAND

THE CLEAR DISKETTE (CLRDKT) COMMAND DELETES ALL FILES, ACTIVE
AND INACTIVE, FROM ONE OR MORE DISKETTES BY DELETING THE DATA FILE
IDENTIFIERS FROM THE DISKETTE LABEL AREA ON EACH DISKETTE.

VERSION 1

# FIG. 9C

# CLRDKT (CLEAR DISKETTE) COMMAND

THE CLEAR DISKETTE (CLRDKT) COMMAND DELETES ALL FILES, ACTIVE
AND INACTIVE, FROM A DISKETTE BY ERASING THE DATA FILE IDENTIFIERS
FROM THE DISKETTE LABEL AREA.

VERSION 2

# FIG. 9D